# EUROPEAN PATENT APPLICATION

(11) **EP 1 026 474 A1**
(43) Date of publication of application: **09.08.2000**
(21) Application number: 00101261.6
(22) Date of filing: 26.01.2000
(51) Int. Cl.: G01B 11/24, G01N 21/86

(54) **Method and apparatus for analyzing surfaces by means of reflected light, particularly for product quality control**

(30) Priority: 01.02.1999 IT VR990008
(71) Applicant: Girlanda, Claudio, 37020 Lugo Di Grezzana (Verona) (IT)
(72) Inventor: Girlanda, Claudio, 37020 Lugo Di Grezzana (Verona) (IT)
(74) Representative: Modiano, Guido, Dr.-Ing.

(57) **Abstract**

A method for measuring and inspecting objects (3) by means of a system for analyzing light reflected by the objects (3), which comprises the following operating steps: lighting the objects (3) to be tested; moving the objects (3) to be tested with respect to the analysis system; acquiring images by using a mask (2); processing the images; using the processing results; checking the validity and completeness of the analysis; and optionally repeating the entire process in case of failure.

## Description

The present invention relates to a method of and an apparatus for measuring the dimensions of various products through image acquisition by means of optical scanning of light reflected by the objects to be inspected and processing of the acquired data. The measurements are aimed at product quality control, detecting imperfections and working control in general.

The apparatus that is used takes advantage of a non-invasive operating principle, in that the product is not subjected to any physical interaction which might produce alterations.

The method according to the present invention can be used in various fields, including:
-- manufactured articles made of ceramics, clay, terracotta, stone materials such as marble, granites and natural stones;
-- flooring systems which use synthetic and/or natural materials (wood, self-locking floors, etcetera);
-- metallic and nonmetallic manufactured articles (nuts and bolts, ironware, rolled sections, drawn products, etcetera);
-- modular materials in general (furniture, plastics materials, rubber materials, panels, etcetera);
-- bricks and tiles, and building materials;
-- accessories and items of plastics material and glass (plates, trays, cutlery, etcetera);
-- foodstuffs (biscuits, sausages, pasta, etcetera) and containers thereof;
-- porcelain products, jewelry in general;
-- shoes and shoe parts;
-- cables, cords, tapes of various materials;
-- complex manufactured articles (doors, windows, chairs, musical instruments, machine parts, etcetera);
-- various materials which require contactless inspection owing to problems of fragility, contamination, etcetera.

There are currently various measurement and defect detecting systems which adopt the principles of geometrical optics, which, as is known, is a branch of applied physics dealing with the propagation of electromagnetic waves in the visible and near-visible spectrum with a simplified approach which is adequate as long as the surface roughness and other discontinuities encountered by the wave in its propagation are quite large with respect to the wavelength. We assume, therefore, that one is dealing with physical values which are large enough with respect to the wavelength.

According to the principles of geometrical optics:
i) lines that are normal to the wavefronts are termed rays;
ii) in a uniform isotropic medium, rays of light travel along straight paths;
iii) given a point source, the shape of the wavefronts in a uniform isotropic medium is spherical.

As far as propagation through different media is concerned:
iv) the directions of incidence and reflection lie on a plane which is normal to the separation surface;
v) the angle of reflection is equal to the angle of incidence.

Defect detecting systems currently in use are generally based on assumption ii) and geometrical methods for detecting profiles and edges.

Essentially, use is made of what is known as structured light, i.e., a narrow set of light rays to which a uniform straight direction of propagation can be associated. The light rays are obtained from coherent light (typically laser light), so-called "moire fringe fields", or a combination of these methods or otherwise.

A geometric approach makes it possible, when the direction of propagation of the rays is at an angle with respect to the optical axis of an image acquisition device, to detect the position of a point in the plane containing the two directions, i.e., the propagation direction and the acquisition direction. Various kinds of device for acquiring and processing the resulting image then allow various measurements to be obtained.

These methods, however, have some drawbacks. First of all, they require the use of a laser source, which affects the cost and complexity of the devices. The detection area is limited instantaneously only to the surface struck by the laser beam. Small changes in the mutual position of the light source and the observer can lead to errors.

A first object of the present invention is to eliminate the need of using light having particular characteristic features and is based on the above cited assumption iii), thereby ensuring a significant improvement in performance and operating versatility with respect to what is known in the current state of the art, by using noncoherent visible light, which is simple and inexpensive to obtain, and thus without the need of using narrow sets of rays having a uniform parallel direction, i.e., using laser sources.

Another object of the present invention is to considerably expand the area of the detection surface so as to acquire the image of multiple significant points at the same time.

A further object is to provide an apparatus which is less sensitive to errors due to small relative movements between the light source and the observer with respect to other techniques which is based on assumption ii).

Another object of the present invention is to fully automate the entire acquisition, analysis and decision process, so as to provide typically human recognition and selection activities with a single device.

According to a first aspect of the present invention, there is provided a method for measuring and inspecting products by means of a system for analyzing light reflected by said products, characterized in that it comprises, also in a different sequence or even simultaneously, the following operating steps:
-- lighting the objects to be inspected;
-- moving the objects to be inspected with respect to the analysis system;
-- acquiring the images;
-- emphasizing the characteristics of the images that are useful for the measurement;
-- processing the images;
-- using the results of the processing;
-- checking the validity and completeness of the analysis and possibly repeating the entire process in case of failure.

According to another aspect of the present invention, a lighting apparatus is provided which has at least one light source with spherical or cylindrical propagation which is designed to strike objects to be checked and characterized in that it comprises at least one filtering mask with multiple slits for the light emitted by the source and directed onto the objects to be checked.

Further aspects and advantages will become better apparent from the following detailed description of an embodiment of an alignment system according to the invention, illustrated only by way of non-limitative example in the accompanying drawings, wherein:
Figure 1 is a diagrammatic view of light propagation in an object lighting system according to the present invention;
Figure 2 is a schematic side view of a system for lighting objects and acquiring images of objects to be inspected;
Figure 3 is a plan view of a light-filtering mask used in the lighting system of Figures 1 and 2; and
Figure 4 is a flowchart of the operating steps of the whole method according to the invention.

In the accompanying drawings, identical parts or components have been designated by the same reference numerals.

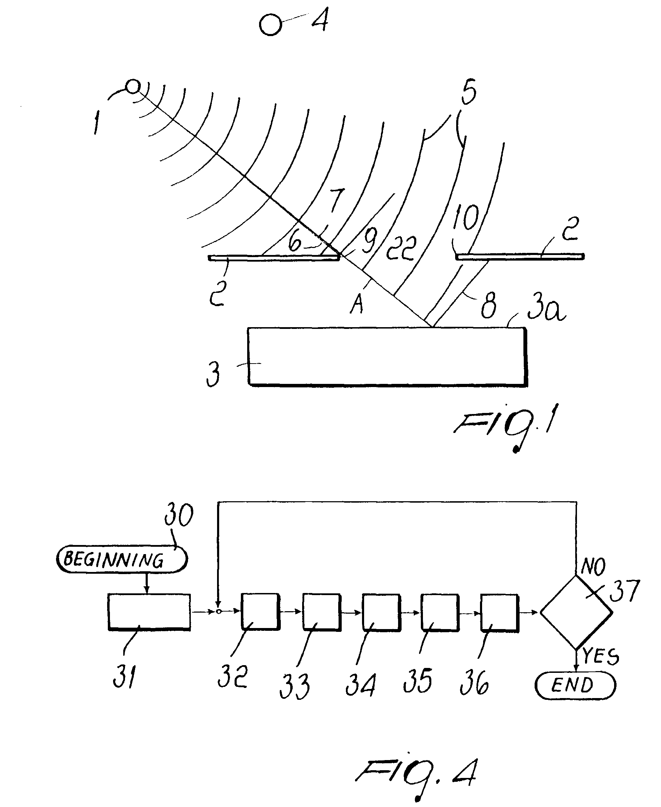

As shown more clearly in Figure 1, a lighting system with geometric light propagation according to the present invention is formed by a light source 1 (which can be a bulb or a neon light) and a mask 2 which has one or more slits 22, each of which is delimited by edges 9 and 10. The drawing illustrates an object 3 with a surface 3a to be analyzed and an observer constituted by an image acquisition device (Figure 2). The drawing also shows the wavefronts 5 of the emitted light, two light rays 6 and 7 and a ray 8 which is ray 7 reflected by the surface 3a to be examined.

Figure 2 also illustrates optical axis A of a cone of light emitted by the source 1 and optical axis B of acquisition cone of the acquisition device 4. The two optical axes A and B form an angle α there-between. The acquisition device 4, in turn, sends acquired information to a computer, generally designated by the reference numeral 40, which can be provided with a monitor and/or a printer.

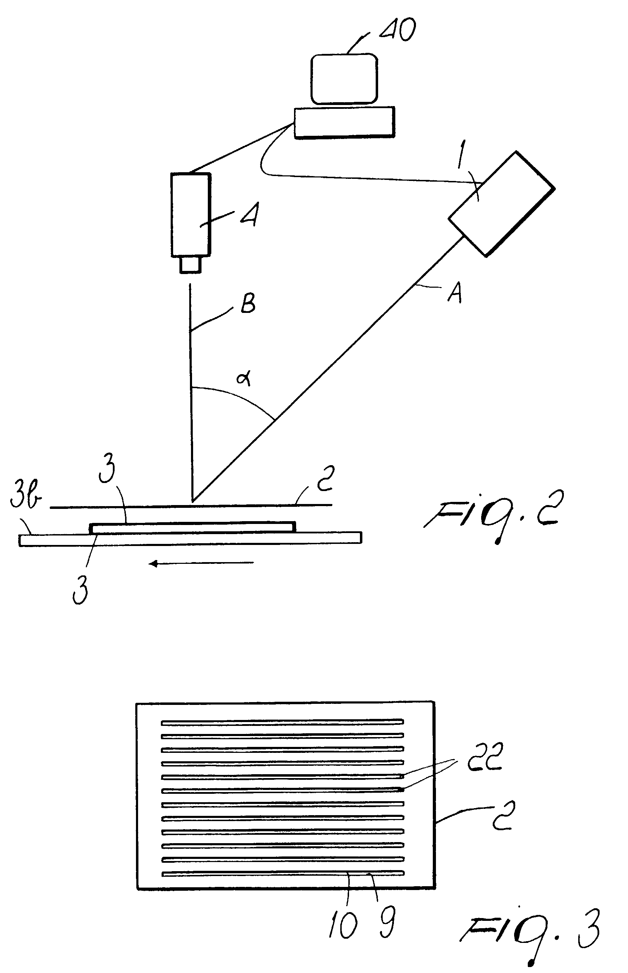

A preferred configuration of the mask 2 formed with parallel slits 22 is shown in Figure 3.

According to sequential order shown in the flowchart of Figure 4, the various steps of the measurement and inspection process according to the present invention occur as follows.

After light source 1 (box 30) has been switched on, the process moves on to the step 31, i.e. setting data of the object 3 to be checked, e.g. a plate-like element made of stone-like material, such as a floor or wall tile. During this step, information concerning output data and any other data, e.g. concerning the product to be analyzed, tolerances, etcetera, are transmitted to the analyzing and processing system. This communication to the analyzing and processing system is performed with conventional man-machine interfaces.

In the subsequent step 32 the relative movement of the object to be analyzed and the acquisition system takes place. During this movement, the step 33 for acquiring images of the object lit by the source 1 occurs. The movement must take place in a very precise and automatically controlled manner in order to provide correct scanning of both the lighting system 1 and the acquisition device 4.

In order to better understand the lighting process during such a movement, reference should be made to Figure 1. The light source 1, which we assume to be a point source, emits radiation in the visible spectrum which propagates through spherical and concentric wave fronts 5. The light rays, as mentioned above, are straight lines normal to said wavefronts. Well then, consider the rays 6 and 7 among the infinite possible rays. The ray 6 is incident to the edge 9 of a slit 22 and does not reach the surface 3a to be examined, whereas the ray 7, which forms an infinitesimal angle with respect to the ray 6 (the angle is exaggerated in the drawing for sake of larity) avoids the mask 2 and reaches the object 3 to be examined.

Let X be the distance that the ray 6 covers before striking the edge 9 of the slit 22 and let Y be the distance covered by the ray 7 before striking the surface 3a to be analyzed. If the difference (Y-X) is sufficiently small with respect to Y, we can consider the rays 6 and 7 as being parallel. Actually, the rays 6 and 7 can be considered to be parallel to one another also because they can be chosen so close to each other that their mutual angle vanishes. Preferably, parallelism is made to depend on the distance, since this allows the source 1 to be considered as a point source. The length of the ray 7 extending from edge 9 of the mask 2 to surface 3a of the object to be tested has a direction then which can be considered as coinciding with the direction of the straight line joining the edge of the slit and the light source.

An observer looking at right angles to the surface 3a will note two sudden variations in lighting at the edge 9 of the mask 2 and at the point where the ray 7 is incident to the surface 3a. If the angle α between the emission axis A and the acquisition axis B, and the distance between mask 2 and the reference surface 3b, on which the object 3 rests (Figure 2), are known (where possible), one can calculate, by simple trigonometric calculations on triangles in space, the position of the point on the surface 3a to be examined upon which the ray 7 is incident with respect to some reference taken on the lighting system. It is thus possible to measure the position of the points that form the boundary line between the dark region and the lit region on the surface 3a to be analyzed.

If the distance between the mask 2 and the reference surface 3b is known, absolute measurements can be made with respect to the reference surface 3b; otherwise relative measurements can be made between points on the boundary line between the dark region and the lit region in order to check linearity, roughness, presence of defects etcetera on the surface 3a.

The acquisition region can be increased considerably by using masks 2 with multiple slits 22, such as the mask shown in Figure 3. In this way, the number of points acquired simultaneously is considerably increased, thereby increasing the degree of parallelism of the acquisition and processing system.

For particular geometries it is possible to use masks 2 having a specific shape: angular, cylindrical, crescent-shaped, etcetera. For example, a cylindrical surface can be analyzed effectively with one or more cylindrical masks. Depending upon the mask used, the light source can be a point source (bulb), a rectilinear source (neon light) or an annular source (neon light).

On the ground of the expected variations of measurements of the surfaces 3a to be analyzed, the following is then stated:
- distance X;
- distance Y-X (which must be such that the reflection points on the surface 3a to be analyzed are within the viewing field of the acquisition device);
- angle between the axis A of the light source 1 and axis B of the image acquisition device 4;
- shape of the mask 2;
- number of slits 22;
- width and length of the slits 22 of the mask 2.

Of course, it is possible to provide in a single block the whole system constituted by the source 1, the mask 2 and the acquisition device 4 and thus to move this mechanism with respect to the surfaces 3a to be analyzed. This aspect is quite important, since it allows, for example, the entire system to be installed as an end-effector of a manipulator (or other driving system with known movements) and accurate measurements to be made along paths chosen at will in a simple and fast manner that requires no calibration.

The image acquisition step 33 takes place simultaneously with the mechanism movement and lighting. It is, of course, possible to provide for precise interaction of a software with the image acquisition device 4 in order to capture each individual image and transfer it to the processing system 40.

Of course the performance varies depending upon the intended goals. The wide variety of image acquisition devices 4 commercially available makes it possible a vast scalability in terms of precision/accuracy/repeatability and performance.

Depending upon the intended goals, it is therefore possible to use:
-- television cameras, which ensure high acquisition speed but limited definition;
-- digital cameras, which suffer from slow acquisition but achieve excellent definition;
-- matrices or arrays of light-sensitive sensors (CCDs and others) which allow great versatility, speed and definition but a narrow acquisition area.

The above is followed by an (optional) image enhancement step 34; i.e., the techniques (known per se in the art) for emphasizing the characteristics most useful for subsequent processing of the image are applied to the image newly acquired by the acquisition device 4.

Then, the image processing step 35 takes place, which, depending upon the data required, performs geometrical measurements, shape measurements, moment calculations or processing operations which do not directly involve metric measurements, such as reference comparisons, threshold comparisons and the like.

Various measurements or characteristics can be extracted for each product 3 to be tested. A few of these are listed herebelow.

Shape properties: contour, geometric shape, regions, presence/absence of particular regions/shapes;

Geometric properties: perimeter, area, maximum and minimum distance from the center of mass to the edge, angles, linearity and parallelisms, roundness, sphericity, curvature, symmetries;

Moments: center of mass, product orientation, eccentricity, bounding rectangle (the smallest rectangle that contains the product aligned to its orientation).

Various computation strategies can be used. The elementary process is the measurement of the altitude of the product 3 with respect to a reference plane (e.g. that one designated by the reference numeral 3a in Figure 2). Starting from this basic operation it is possible to perform many other operations. The system in any case allows other kinds of processing, such as:
A. Reference measurements. By storing scanned images of a reference product, it is possible to compare them with the scannings of subsequent sample products for similarity/matching analysis with tolerances chosen at will. This type of operation does not explicitly involve precise metric measurement of the dimensions but utilizes the invariance of the measurement.
B. Threshold measurement. In some applications, it might be sufficient for the system to detect when the position of given points exceeds certain limits. Let us consider, for example, the case of cable diameter/curvature control. It might be sufficient for the system to produce a signal when the diameter decreases/increases in excess with respect to desired dimensions. This processing can be easily performed by comparison between a previously stored threshold image and the acquired image.

In other words, it is not always necessary for the system to explicitly provide for measurement; in some circumstances, processing which employs the time-invariance of the measurement might be simpler and more convenient.

General-purpose or dedicated generation systems can be used to process the generated images, depending upon the performance required. The former include personal computers and in particular so-called industrial computers, whereas the latter include systems comprising one or more DSPs (Digital Signal Processors), microprocessors, specifically developed ASICs, PLDs, etcetera.

As regards the required computing power, the great development of applications and services in the field of imaging has stimulated research and production of highly powerful hardware systems aimed at solving these problems. Integrated solutions are available which use DSPs and makes it possible acquisition and complex processing in real time. Other highly innovative and efficient integrated solutions comprise real-time acquisition and processing systems which use programmable neural networks. Neural networks are a type of circuits that is inherently most suitable for recognition and comparison of large data sets in parallel, such as a set of points of an image.

In the subsequent step, the processing results are used in various manners. They can be signaled, communicated or stored. In particular, they can be sent to other subsequent machines in the same production chain, e.g. arranged to accept or reject a product or to perform other operations on it.

Finally, there is provided a step for general checking of the preceding steps. In case of incorrect procedures or inconsistent data, the system can decide to repeat all the steps starting from the first one.

As shown in the above description, the invention is susceptible to numerous modifications and variations, all of which are to be considered as being within the scope of the invention as defined by the appended claims.

The following definitions should be taken into account when interpreting the claims:
-- the terms "point" and "line" used in the claims should not be construed in their geometrical meaning (in which the point is dimensionless and the line has only the dimension of length); rather, a point (and each point) that forms a line should be construed to have finite dimensions which coincide with those that allow an elementary point to be formed in the resolution of the acquired image.
-- the term "programmable logic device" designates various memories, ASICs, PLDs, GALs and the like.

The disclosures in Italian Patent Application No. VR99A000008 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for measuring and inspecting products by means of a system for analyzing light reflected by said products, characterized in that it comprises, even in a different time sequence or even simultaneously, the following operating steps:
-- lighting the objects (3) to be tested;
-- moving the objects (3) to be tested with respect to the analysis system;
-- acquiring the images;
-- processing the images;
-- using the results of the processing;
-- checking the validity and completeness of the analysis and possibly repeating the entire process in case of failure.

2. The method according to claim 1, characterized in that it comprises a step for emphasizing the features of the images useful for measurement after said images have been acquired.

3. The method according to claim 1 or 2, characterized in that said lighting is performed by means of spherical or cylindrical propagation light and is filtered through one or more slits or openings (22) in one or more screening masks (2).

4. The method according to any one of the preceding claims, characterized in that said movement is performed by automated machinery controlled by a software.

5. The method according to claim 4, characterized in that said movement allows scanning of each point of the surface of the object or objects (3) to be tested on the part of at least one boundary line between lit regions and regions kept dark by the or each screening mask (2).

6. The method according to any one of the preceding claims 3 to 5, characterized in that the acquisition of images of the objects (3) to be tested relates to the points of separation between the lit regions and the regions kept in the dark by said screening mask (2), and in that the acquired images are such that each point of the object (3) in at least one image belongs to a boundary line between the lit regions and the regions kept in the dark by said screening mask or masks (2).

7. The method according to claim 6, characterized in that said image acquisition occurs by means of at least one television camera (4).

8. The method according to claim 6, characterized in that said image acquisition occurs by means of at least one digital still camera.

9. The method according to claim 6, characterized in that said image acquisition occurs by means of at least one array of photosensitive sensors.

10. The method according to any one of the preceding claims, characterized in that said image processing consists of geometrical calculations on acquired measurements, set data and reference points.

11. The method according to any one of claims 1 to 9, characterized in that said image processing consists in comparing the images acquired from the object or objects (3) to be tested with respect to images acquired from a reference object.

12. The method according to any one of claims 1 to 9, characterized in that said image processing consists in comparing the position of acquired characteristic points of the image with respect to positions of points preset as thresholds.

13. The method according to any one of claims 1 to 12, characterized in that said image processing occurs by means of dedicated systems which use at least one DSP.

14. The method according to any one of claims 1 to 12, characterized in that said image processing occurs by means of dedicated systems which use at least one microprocessor.

15. The method according to any one of claims 1 to 12, characterized in that said image processing occurs by means of dedicated systems which use at least one programmable logic device.

16. The method according to any one of claims 1 to 12, characterized in that said image processing occurs by means of at least one neural network.

17. The method according to any one of the preceding claims, characterized in that said use of processing results comprises storing data in at least one mass-storage memory.

18. The method according to any one of claims 1 to 16, characterized in that said use of processing results comprises communicating input data to at least one apparatus for handling the object or objects (3).

19. A lighting apparatus for performing the method according to any claim 1 to 18, having at least one light source (1) with spherical or cylindrical propagation arranged to strike objects (3) to be tested, and characterized in that it comprises at least one filtering mask (2) with one or more slits (22) for the light emitted by said source and directed onto the objects (3) to be tested.

20. The apparatus according to claim 19, characterized in that said source (1) is a point source.

21. The apparatus according to claim 19, characterized in that said source (1) is a rectilinear source.

22. The apparatus according to claim 19, characterized in that said source (1) is a spherical annular source.
